# EUROPÄISCHE PATENTSCHRIFT

(11) **EP 3 028 986 B1**
(45) Veröffentlichungstag und Bekanntmachung des Hinweises auf die Patenterteilung: **11.10.2017**
(21) Anmeldenummer: 15198172.7
(22) Anmeldetag: 07.12.2015
(51) Int. Cl.: B67B 3/20, B65G 47/86, B67C 7/00

(54) **VORRICHTUNG ZUM TRANSPORTIEREN VON BEHÄLTERN**
DEVICE FOR TRANSPORTING CONTAINERS
DISPOSITIF DE TRANSPORT DE RECIPIENTS

(30) Priorität: 05.12.2014 DE 102014118032
(43) Veröffentlichungstag der Anmeldung: 08.06.2016
(73) Patentinhaber: Krones AG, 93073 Neutraubling (DE)
(72) Erfinder: Kampmann, Lutz, 93073 Neutraubling (DE); Landler, Bruno, 93073 Neutraubling (DE); Knieling, Erwin, 93073 Neutraubling (DE); Peter, Michael, 93073 Neutraubling (DE); Kirsch, Peter, 93073 Neutraubling (DE)
(74) Vertreter: Nordmeyer, Philipp Werner

(56) Entgegenhaltungen:
- EP-A1- 2 716 593
- BE-A1- 857 107
- DE-A1- 4 424 077
- DE-A1-102013 101 645

## Beschreibung

### Technisches Gebiet

Die vorliegende Erfindung betrifft eine Vorrichtung zum Transportieren von Behältern, bevorzugt in einer Getränkeabfüllanlage, wobei ein um eine Rotationsachse umlaufendes Karussell zum Transportieren der Behälter vorgesehen ist.

### Stand der Technik

In Getränkeabfüllanlagen ist es bekannt, eine Abfolge von nacheinander geschalteten Karussellen vorzusehen, welche die jeweiligen Behandlungsschritte an den zu befüllenden Behältern vornehmen beziehungsweise welche ein Überführen der jeweiligen Behälter von einem Behandlungskarussell zu einem nächsten Behandlungskarussell ermöglichen.

Die Karusselle zum Transportieren der Behälter können dabei entsprechend entweder solche sein, an welchen eine tatsächliche Behandlung der Behälter vorgenommen wird, oder aber solche, welche lediglich zum Überführen der Behälter von einem Behandlungskarussell zu einem nächsten vorgesehen sind.

Üblich ist es hierbei, die Behälter entweder in ihrem Halsbereich, beispielsweise an einem Tragring, hängend in den jeweiligen Karussellen zu transportieren, oder aber auf Behältertellern stehend zu transportieren. Durch diese Haltevorrichtungen ist es möglich, das Gewicht des jeweiligen Behälters sowie des sich im Behälter befindlichen Füllprodukts zu tragen, sowie etwaige auf den Behälter aufgebrachte Kräfte, welche durch die Behandlung anfallen, beispielsweise durch das Anpressen einer Füllglocke oder das Aufbringen eines Schraubverschlusses, aufzunehmen.

Weiterhin werden die Behälter häufig in ihrem Bauchbereich geführt, wobei sie in radial nach außen offenen Behältertaschen eines Bauchsterns in ihrem Bauchbereich aufgenommen sind. So wird schließlich eine Führung des jeweiligen Behälters an der Haltevorrichtung, welche im Halsbereich oder im Bodenbereich des Behälters angreifen kann, und durch die Behältertasche, welche im Bauchbereich angreift, erreicht. Hierüber wird ein stabiles Führen der Behälter in dem jeweiligen Behälterkarussell erreicht.

Durch die Übergabe der Behälter von einem Behälterkarussell auf ein anderes werden jedoch aufgrund der in unterschiedliche Richtungen wirkenden Zentrifugalkräfte Impulse auf den Behälter ausgeübt, welche dazu führen können, dass das in dem Behälter aufgenommene Füllprodukt aus der Behälteröffnung herausschwappt. Die Impulse werden unter anderem durch das Auftreten der entsprechend fast entgegengesetzt wirkenden Zentrifugalkräfte an den meistens unstetigen Übergabestellen der Behälter von einem Karussell zu einem zu dem anderen aufgebracht.

Aus der EP 2 265 541 A1 ist ein Drehförderer mit einem Greifmechanismus bekannt, bei welchem Behälter in ihrem Bauchbereich durch einen aktiven Greifer gegriffen werden. Die DE 10 2013 101 645 A1 beschreibt einen Transporteur für Flaschen oder ähnliche Behälter sowie eine Behälterbehandlungsmaschine. Die EP 2 716 593 A1 beschreibt eine Vorrichtung gemäß dem Oberbegriff des Anspruchs 1 mit einem Klammergreifer für Behälter.

Die BE 857 107 A beschreibt ein Transportsystem für Behälter in einer Abfüllmaschine. Die DE 44 24 077 A1 beschreibt eine Vorrichtung zum Transportieren von Gegenständen.

### Darstellung der Erfindung

Ausgehend von dem bekannten Stand der Technik ist es eine Aufgabe der vorliegenden Erfindung, eine verbesserte Vorrichtung zum Transportieren von Behältern anzugeben.

Diese Aufgabe wird durch eine Vorrichtung zum Transportieren von Behältern mit den Merkmalen des Anspruchs 1 gelöst. Vorteilhafte Weiterbildungen ergeben sich aus den Unteransprüchen. Entsprechend wird eine Vorrichtung zum Transportieren von Behältern, bevorzugt in einer Getränkeabfüllanlage, vorgeschlagen, umfassend ein um eine Rotationsachse umlaufendes Karussell mit mindestens einer Haltevorrichtung zum Halten eines zu transportierenden Behälters und mit mindestens einer Behältertasche zum Aufnehmen des gehaltenen Behälters in einem Bauchbereich des Behälters. Erfindungsgemäß ist eine elastische Klammervorrichtung zum Halten des Behälters in der Behältertasche vorgesehen.

Dadurch, dass eine elastische Klammervorrichtung zum Halten des Behälters in der Behältertasche vorgesehen ist, kann das Verhalten des Behälters beim Durchlaufen einer Transportstrecke verbessert werden. Insbesondere kann auf diese Weise erreicht werden, dass das Aufbringen eines Impulses auf das in dem Behälter vorliegende Füllgut reduziert wird und entsprechend die Schwappneigung des Füllguts verringert wird beziehungsweise vollständig unterbunden werden kann.

Dadurch, dass die Klammervorrichtung als elastische Klammervorrichtung ausgebildet ist, kann auf die Bereitstellung einer aufwändigen Ansteuerung verzichtet werden und es wird weiterhin ein sanftes Übergeben der Behälter von einem Transportkarussell auf ein nachfolgendes Transportkarussell unterstützt, da durch das elastische Greifen der Behälter eine entsprechende Dämpfung des Behälters bei der Übergabe von einem Karussell auf das andere Karussell erreicht wird. Eine solche Dämpfung kann bei einem aktiven Greifmechanismus nicht erreicht werden, welcher den Behälter erst dann greift, wenn er sich bereits in der gewünschten Endposition befindet.

Erfindungsgemäß ist die elastische Klammervorrichtung in Form einer Klammereinheit vorgesehen, welche zwischen je zwei Behältertaschen angeordnet ist, so dass je eine Klammerbacke der Klammereinheit der einen Behältertasche zugeordnet ist, und die andere Klammerbacke der Klammereinheit der anderen Behältertasche zugeordnet ist. Auf diese Weise lässt sich ein effizienter Aufbau erreichen.

Die Klammervorrichtung weist bevorzugt zwei Klammerbacken je Behältertasche auf, so dass ein symmetrisches Einführen des jeweils übergebenen Behälters sowie ein symmetrisches Halten der Behälter in der Behältertasche erreicht wird. Die Klammerbacken sind dabei bevorzugt auf der in Rotationsrichtung vorne sowie hinten liegenden Seite der Behältertasche vorgesehen.

Besonders bevorzugt weist jede Klammerbacke in ihrem radial nach außen gerichteten Ende ein in Umfangsrichtung von der Behältertasche fortweisenden Bereich als Einführhilfe auf. Dieser als Einführhilfe ausgebildete Bereich ist entsprechend nach außen hin aufgeweitet, derart, dass das Einführen von Behältern bei der Übergabe von einem Behälterkarussell auf ein nachfolgendes Behälterkarussell erleichtert wird und gleichzeitig die weiter oben beschriebene Dämpfungswirkung besonders gut erreicht wird, da der Behälter beim Einführen in die Behältertasche gegen die elastische Wirkung der Klammervorrichtung in die Behältertasche eingedrückt werden muss. Entsprechend findet hier eine Dämpfung des Einführvorgangs in die Behältertasche statt, so dass ein sanftes Übergeben erreicht wird. Die beiden zusammenspielenden Einführhilfen bilden damit eine trichterförmige Einführgeometrie für den einzuführenden Behälter aus.

Im Gegensatz zu den herkömmlichen Vorrichtungen, bei welchen der Behälter direkt in die Behältertasche übergeben wird und entsprechend erst beim Anschlagen an die Behältertasche abrupt abgedämpft wird, findet bei einem Einführen gegen die elastische Vorspannung der Klammervorrichtung eine Dämpfung über einen längeren Verfahrweg hinweg statt, so dass auf diese Weise ein sanfteres Einführen und damit auch eine Reduktion der Geschwindigkeit, mit welcher der Behälter an der Behältertasche zur Anlage kommt, erreicht werden kann. Entsprechend findet kein vollständig abruptes Abbremsen des Behälters durch Anschlagen an der Behältertasche statt, sondern es kann ein sanftes Einführen mit einem entsprechend geringeren Übertrag eines Impulses und entsprechend einer geringeren Schwappneigung für das jeweilige Füllprodukt aus der Mündungsöffnung des Behälters erreicht werden.

Bevorzugt ist die Klammervorrichtung so ausgebildet, dass das Einführen des Behälters in die Behältertasche gegen die Überwindung der Vorspannung der Klemmvorrichtung und damit eines Widerstandes stattfindet und entsprechend die elastische Klammervorrichtung erst nach Überwindung dieses Widerstandes die Behälter in der Behältertasche hält. Auf diese Weise kann die oben beschriebene Dämpfung erreicht werden.

Entsprechend werden die einlaufseitig auftretenden Stöße auf den jeweilig übergebenen Behälter reduziert, so dass während des Einführens des Behälters in die Behältertasche unerwünschte Bewegungen des Behälters gedämpft werden und ein Anschlagen an der Endposition in der Behältertasche deutlich reduziert werden kann. Nach der Umkehr der Zentrifugalkraft, welche entsprechend bei dem Eintritt in die Kreisbahn des Folgekarussells stattfindet, wird der Auslenkungsdrang des Behälters durch die elastische Klammervorrichtung gedämpft und damit auch ein Impuls des Behälters reduziert, an eine entsprechende Außenführung, welche außerhalb des Karussells verläuft, anzuschlagen.

Durch diese positiven Einflüsse wird es ermöglicht, die Schwappneigung der Behälter deutlich zu reduzieren, so dass auf diese Weise auch der Durchsatz bei gleichbleibendem Karusselldurchmesser erhöht werden kann beziehungsweise der Karusselldurchmesser bei gleichem Durchsatz reduziert werden kann, was zu kompakteren Anlagen führt.

Die elastische Klammervorrichtung ist bevorzugt so ausgebildet, dass sie den Behälter in der Behältertasche nicht vollständig starr an seiner Position hält, sondern eine gewisse Auslenkung, welche durch die Zentrifugalkraft auftritt, erlaubt. Entsprechend kann die elastische Klammervorrichtung in ihrer Geometrie und Materialauswahl so ausgebildet sein, dass eine Bewegung des Behälters in der Behältertasche möglich ist, um den Impuls an der unstetigen Übergabe zwischen zwei Karussells weiter zu reduzieren.

Weiterhin ist es bevorzugt, die elastische Vorspannung der Klammerbacken der Klammereinheit über eine Verstellvorrichtung, bevorzugt mittels eines Spindeltriebs oder eines Keilmechanismus, verstellbar zu machen.

Darüber hinaus ist es bevorzugt, die radiale Position eines Klemmbereichs der elastischen Klammervorrichtung mittels einer Verstellvorrichtung, bevorzugt mittels eines Spindeltriebs oder eines Keilmechanismus, verstellbar zu machen.

Auf diese Weise kann erreicht werden, dass für unterschiedliche Behältergrößen beziehungsweise unterschiedliche Füllgrade der Behälter jeweils eine unterschiedliche elastische Vorspannung der elastischen Klammervorrichtung vorgesehen wird, um auf diese Weise ein jeweils optimales Einführ- beziehungsweise Übergabeverhalten der jeweiligen Behälter zu erreichen. Weiterhin kann der Klemmbereich an die jeweilige Behältergeometrie angepasst werden.

Die oben gestellte Aufgabe wird weiterhin durch eine Verschließvorrichtung mit den Merkmalen des Anspruchs 7 gelöst.

Entsprechend wird eine Verschließvorrichtung zum Verschließen befüllter Behälter, bevorzugt in einer Getränkeabfüllanlage, vorgeschlagen, mit mindestens einer mit einem um eine Rotationsachse umlaufenden Karussell umlaufenden Verschließeinrichtung zum Aufbringen eines Behälterverschlusses zum Verschließen einer Mündung eines befüllten Behälters. Erfindungsgemäß ist mindestens eine Vorrichtung zum Transportieren der zu verschließenden Behälter gemäß einer der oben beschriebenen Ausführungen vorgesehen.

### Kurze Beschreibung der Figuren

Bevorzugte weitere Ausführungsformen der Erfindung werden durch die nachfolgende Beschreibung der Figur näher erläutert. Dabei zeigt:

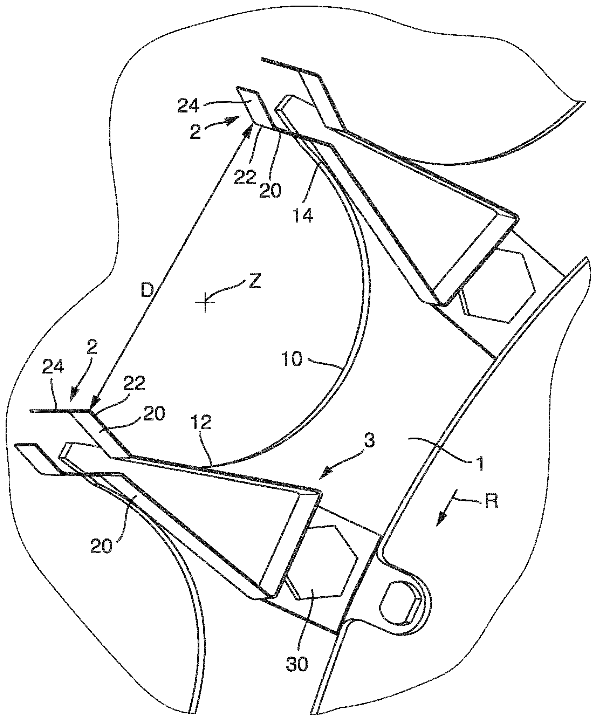

- Figur 1: eine schematische Darstellung einer Vorrichtung zum Transportieren von Behältern in einer Ausschnittsdarstellung eines Bauchsterns eines Karussells.

### Detaillierte Beschreibung bevorzugter Ausführungsbeispiele

Im Folgenden werden bevorzugte Ausführungsbeispiele anhand der Figur beschrieben.

In Figur 1 ist eine schematische Darstellung eines Ausschnitts eines Bauchsterns 1 eines umlaufenden Karussells in einer Getränkeabfüllanlage gezeigt. Der Bauchstern 1 umfasst eine Vielzahl von Behältertaschen 10, welche den jeweiligen zu transportierenden Behälter in dessen Bauchbereich aufnimmt. Der Bauchstern 1 liegt in dem jeweiligen, um die Rotationsachse umlaufenden Karussell entsprechend auf einer Höhe, welche der Höhe entspricht, in welcher der jeweilige Bauchbereich eines Behälters aufgenommen werden wird.

Der zu transportierende Behälter ist bei seinem Transport in dem Karussell üblicherweise in einer in der Figur 1 nicht gezeigten Haltevorrichtung gehalten, welche beispielsweise in Form einer so genannten Neckklammer vorgesehen sein kann, in welcher die Behälter im Bereich ihres Halsringes gehalten werden. Diese Ausführung ist insbesondere für den Transport beziehungsweise die Behandlung von PET-Flaschen von Bedeutung. In einer alternativen Gestaltung ist die Haltevorrichtung in Form eines Behältertellers vorgesehen, auf welchem der Behälter mit seinem Bodenbereich aufsteht und auf diese Weise gehalten in dem umlaufenden Karussell transportiert wird. Entsprechend wird der Behälter in seinem Halsbereich oder seinem Bodenbereich mittels der Haltevorrichtung gehalten und in seinem Bauchbereich in der Behältertasche 10 des Bauchsterns 1 geführt.

Eine elastische Klammervorrichtung 2 ist an dem Bauchstern 1 vorgesehen, welche den jeweils in der Behältertasche 10 aufgenommenen Behälter in der Behältertasche 10 hält. Die Klammervorrichtung 2 weist zwei Klammerbacken 20 auf, welche an dem in Rotationsrichtung R des Bauchsterns 1 gesehenen vorderen Ende 12 der Behältertasche 10, sowie an dem in Rotationsrichtung R gesehenen hinteren Ende 14 der Behältertasche 10 vorgesehen sind. Entsprechend liegen beim Einführen eines Behälters in die Behältertasche 10 die Klammerbacken 20 der Klammervorrichtung 2 an dem Behälter an, so dass der Behälter in der Behältertasche 10 gehalten wird.

Die Klammerbacken 20 weisen einen Klemmbereich 22 auf, welcher jeweils in den von der Behältertasche 10 definierten Behälteraufnahmebereich hereinragt. Mit anderen Worten ist der zwischen den beiden Klemmbereichen 22 im Ausgangszustand gebildete Abstand D geringer, als der Durchmesser eines in der Behältertasche 10 aufzunehmenden Behälters. Entsprechend muss ein Behälter gegen die Vorspannung der elastischen Klammervorrichtung 2 in die Behältertasche 10 eingeführt werden. Ist der Behälter in die Behältertasche 10 eingeführt, so findet eine Klemmwirkung durch die Klammervorrichtung 2 auf den Behälter statt. Die Klemmbereiche 22 sind dabei in einer Ebene angeordnet, welche in radialer Richtung außerhalb des Zentrums Z der Behältertasche 10 liegt, um einen in der Behältertasche 10 aufgenommenen Behälter zu hintergreifen und damit eine auf die Behältertasche 10 zu gerichtete elastische Kraft auszuüben.

Die elastische Klammervorrichtung 2 weist weiterhin Einführhilfen 24 auf, welche entsprechend durch nach außen gerichtete Abschnitte der Klammerbacken 20 ausgebildet sind. Mit anderen Worten sind die Einführhilfen 24 nach außen gerichtet, also von der jeweiligen Behältertasche 10 fort und zu der angrenzenden Behältertasche 10 hin gerichtet, so dass beim Einführen eines Behälters eine trichterförmige Einführgeometrie zwischen den beiden gegenüberliegenden Einführhilfen 24 einer Behältertasche 10 ausgebildet wird.

Mittels der Einführhilfen 24 ist es möglich, dass zum einen ein Behälter besser in die Behältertasche 10 eingeführt werden kann, da er noch besser eingefangen und in die Behältertasche 10 geführt wird. Zum anderen findet über die Einführhilfen 24 eine Dämpfung des Einführens des Behälters in die Behältertasche 10 statt. Die Einführhilfen 24 im Zusammenspiel mit der elastischen Auslegung der Klammerbacken 20 bewirken nämlich, dass ein sich in Richtung der Behältertasche 10 bewegender Behälter in einem Bereich an den Einführhilfen 24 zur Anlage kommt, welcher radial außerhalb des Klemmbereichs 22 liegt und entsprechend zu einem Aufweiten der Klammerbacken 20 führt. Durch das elastische Aufweiten der Klammerbacken 20 wird jedoch bereits ein Widerstand auf den Behälter ausgeübt, welcher abhängig von der jeweiligen Federkonstanten der Klammerbacken 20, zu einer stärkeren oder geringeren Dämpfung des Einführens des Behälters in die Behältertasche 10 führt. Durch diese Dämpfung des Einführens des Behälters in die Behältertasche 10 kann ein sanfteres Einführen des Behälters in die Behältertasche 10 erreicht werden, wodurch der Behälter nicht mit voller Geschwindigkeit in der Behältertasche 10 anschlägt, sondern diese Geschwindigkeit durch den Widerstand an der Einführhilfe und dem Klemmbereich 22 vorher schon reduziert wird. Entsprechend kann der Impuls, welcher durch das Anschlagen beziehungsweise Reduzieren der Geschwindigkeit des Behälters auf das in dem Behälter befindliche Füllprodukt übertragen wird, reduziert werden, so dass auf diese Weise die Schwappneigung verringert wird.

Erst wenn der Behälter im Wesentlichen vollständig in der Behältertasche 10 aufgenommen ist, federt die Klammerbacke 20 derart elastisch zurück, dass der Klemmbereich 22 den Behälter aus der Sicht der Behältertasche 10 hintergreift und entsprechend den Behälter in der Behältertasche 10 hält.

Je nach Auswahl der Federkonstanten der elastischen Klammervorrichtung 2 wird auf diese Weise erreicht, dass der Behälter entweder vollständig in Anlage an der Behältertasche 10 gehalten wird, oder bei einer weniger starken Ausbildung der Federkonstanten auch ein entsprechendes Auswandern des Behälters aufgrund der Zentrifugalkraft in radialer Richtung nach außen ermöglicht wird. Bei einer entsprechenden Wahl der Federkonstanten mit einem geringeren Wert, welcher ein leichtes Auswandern des Behälters aufgrund der Zentrifugalkraft ermöglicht, kann entsprechend auch das Übergeben an das nachfolgende Karussell sanfter gestaltet werden, so dass der Wahl der Federkonstanten eine Bedeutung zukommt.

Die elastische Klammervorrichtung 2 ist bevorzugt in Form der in der Figur 1 gezeigten Klammereinheit 3 vorgesehen, wobei die Klammereinheit 3 jeweils zwei Klammerbacken 20 umfasst und zwischen jeweils zwei aufeinander folgenden Behältertaschen 10 vorgesehen ist. Dabei ist entsprechend eine erste Klammerbacke 20 einer ersten Behältertasche 10 zugeordnet und eine zweite Klammerbacke 20 einer benachbarten Behältertasche 10 zugeordnet.

Die Klammereinheit 3 kann einfach symmetrisch ausgebildet werden und über einen Befestigungsmechanismus 30 an dem Bauchstern 1 zwischen zwei benachbarten Behältertaschen 10 montiert werden.

Die Federkonstante der elastischen Klammervorrichtung 2 kann fest vorgegeben sein und die Klammervorrichtung 2 in Form der Klammereinheit 3 als einfaches Biegeteil hergestellt sein.

In einer alternativen Ausführungsform kann die elastische Klammervorrichtung 2 eine Verstellvorrichtung aufweisen, mittels welcher eine Verstellung der jeweiligen Position der Klammerbacken 20 und insbesondere des Klemmbereichs 22 darüber erfolgen kann, dass die Klammereinheit 3 in radialer Richtung verschoben wird. Auf diese Weise können unterschiedliche Behältergeometrien berücksichtigt werden. Diese Verschiebung kann beispielsweise über einen radial angeordneten Spindeltrieb erreicht werden.

Eine Änderung der Vorspannung der elastischen Klammervorrichtung 2 kann in einer bevorzugten Variante beispielsweise über eine Verstellvorrichtung erreicht werden, welche beispielsweise zwischen den beiden Klammerbacken 20 einer Klammereinheit 3 einen Keil vorsieht, der radial verschoben werden kann, und über dessen Stellung dann der freie Arm der jeweiligen Klammerbacke 20 verstellt werden kann und auf diese Weise die Federwirkung der Klammerbacke 20 variiert werden kann. Dieser Keil kann ebenfalls über einen radial angeordneten Spindeltrieb verschoben werden.

Die Klammerbacken 20 sind bevorzugt aus einem elastischen Band in einer Breite von 20 bis 50 mm und einer Stärke von 0,5 bis 2,5 mm ausgebildet, und beispielsweise aus Edelstahl hergestellt. Die Klammerbacken 20 können jedoch auch aus einem Kunststoff hergestellt sein.

Die jeweilige Ausbildung der Klammerbacken 20 kann so ausgeführt werden, dass sie den jeweiligen Behälterformen angepasst sind. Beispielsweise können die Kanten abgefast sein, um ein sanftes Einführen und Herausführen des jeweiligen Behälters zu erreichen, ohne dass der Behälter oder ein beispielsweise bereits aufgebrachtes Etikett durch die elastische Klammervorrichtung beschädigt wird.

Das Karussell mit dem gezeigten Bauchstern 1 ist bevorzugt ein Karussell eines Verschließers, in welchem die bereits befüllten Behälter mittels einer Verschließeinrichtung mit einem entsprechenden Behälterverschluss versehen werden. Die Verschließvorrichtung kann beispielsweise in Form eines Verschließkopfes zum Aufbringen von Schraubverschlüssen, Aufrollverschlüssen, Kronkorken, Stopfen oder Siegelverschlüssen vorgesehen sein. Die Verschließvorrichtung ist dabei an dem umlaufenden Karussell angeordnet und läuft mit diesem um. Bei der Übergabe der Behälter an einen Verschließer beziehungsweise ebenso an die zwischen dem Füllerkarussell und dem Verschließerkarussell angeordneten Transportkarusselle ist die Problematik des Ausschwappens beziehungsweise Überschwappens von Füllprodukt aus dem jeweiligen Behälter bei der Übergabe der Behälter von einem Karussell zu dem darauf folgenden besonders ausgeprägt.

### Bezugszeichenliste

- 1: Bauchstern
- 10: Behältertasche
- 12: vorderes Ende der Behältertasche
- 14: hinteres Ende der Behältertasche
- 2: elastische Klammervorrichtung
- 20: Klammerbacke
- 22: Klemmbereich
- 24: Einführhilfe
- 3: Klammereinheit
- 30: Befestigungsmechanismus
- R: Rotationsrichtung
- D: Abstand zwischen den Klemmbereichen
- Z: Zentrum der Behältertasche

## Patentansprüche

1. Vorrichtung zum Transportieren von Behältern, bevorzugt in einer Getränkeabfüllanlage, umfassend ein um eine Rotationsachse umlaufendes Karussell mit mindestens einer Haltevorrichtung zum Halten eines zu transportierenden Behälters und mit mindestens einer Behältertasche (10) zum Aufnehmen des gehaltenen Behälters in einem Bauchbereich des Behälters, wobei eine elastische Klammervorrichtung (2) zum Halten des Behälters in der Behältertasche (10) vorgesehen ist,
**dadurch gekennzeichnet, dass**
jeweils zwei Klammerbacken (20) in einer Klammereinheit (3) zusammengefasst sind, welche zwischen zwei nebeneinander liegenden Behältertaschen (10) angeordnet ist.

2. Vorrichtung gemäß Anspruch 1, **dadurch gekennzeichnet, dass** die elastische Klammervorrichtung (2) zwei Klammerbacken (20) je Behältertasche (10) aufweist.

3. Vorrichtung gemäß Anspruch 1 oder 2, **dadurch gekennzeichnet, dass** mindestens eine Klammerbacke (20) der elastischen Klammervorrichtung (2) an ihrem radial nach außen gewandten Ende eine von der Behältertasche (10) fortweisende Einführhilfe (24) aufweist.

4. Vorrichtung gemäß einem der vorstehenden Ansprüche, **dadurch gekennzeichnet, dass** die elastische Klammervorrichtung (2) so eingerichtet ist, dass ein Behälter gegen die Vorspannung der elastischen Klammervorrichtung (2) in die Behältertasche (10) einführbar ist.

5. Vorrichtung gemäß einem der vorstehenden Ansprüche, **dadurch gekennzeichnet, dass** die elastische Vorspannung der Klammerbacken (20) der Klammereinheit (3) über eine Verstellvorrichtung, bevorzugt mittels eines Spindeltriebs oder eines Keilmechanismus, verstellbar ist.

6. Vorrichtung gemäß einem der vorstehenden Ansprüche, **dadurch gekennzeichnet, dass** die radiale Position eines Klemmbereichs (22) der elastischen Klammervorrichtung (2) mittels einer Verstellvorrichtung, bevorzugt mittels eines Spindeltriebs oder eines Keilmechanismus, verstellbar ist.

7. Verschließvorrichtung zum Verschließen befüllter Behälter, bevorzugt in einer Getränkeabfüllanlage, mit mindestens einer mit einem um eine Rotationsachse umlaufenden Karussell umlaufenden Verschließeinrichtung zum Aufbringen eines Behälterverschlusses zum Verschließen einer Mündung eines befüllten Behälters,
**gekennzeichnet durch**
mindestens eine Vorrichtung zum Transportieren der zu verschließenden Behälter gemäß einem der vorstehenden Ansprüche.

## Claims

1. Device for transporting containers, preferably in a beverage filling plant, comprising a carousel, which rotates about a rotation axis, has at least one holding device for holding a container to be transported, and has at least one container pocket (10) for receiving the held container in a waist region of the container, a resilient clamping device (2) for holding the container in the container pocket (10) is provided,
**characterised in that**
two clamping jaws (20) are respectively combined in a clamping unit (3) which is arranged between two adjacent container pockets (10).

2. Device according to claim 1, **characterised in that** the resilient clamping device (2) comprises two clamping jaws (20) per container pocket (10).

3. Device according to claim 1 or 2, **characterised in that** at least one clamping jaw (20) of the resilient clamping device (2) comprises, at its radially outwardly facing end, an insertion aid (24) projecting from the container pocket (10).

4. Device according to one of the preceding claims, **characterised in that** the resilient clamping device (2) is configured such that a container can be inserted into the container pocket (10) against the prestress of the resilient clamping device (2).

5. Device according to one of the preceding claims, **characterised in that** the resilient prestress of the clamping jaws (20) of the clamping unit (3) can be adjusted by means of an adjustment device, preferably by means of a spindle drive or a wedge mechanism.

6. Device according to one of the preceding claims, **characterised in that** the radial position of a clamping region (22) of the resilient clamping device (2) can be adjusted by means of an adjustment device, preferably by means of a spindle drive or a wedge mechanism.

7. Closure device for closing filled containers, preferably in a beverage filling plant, having at least one closure device, which rotates with a carousel rotating about a rotation axis, for applying a container closure for closing an opening of a filled container
**characterised by**
at least one device for transporting the containers to be closed according to one of the preceding claims.

## Revendications

1. Dispositif de transport de récipients, de préférence dans une installation de remplissage de boisson, comprenant un carrousel tournant autour d'un axe de rotation avec au moins un dispositif de support pour supporter un récipient à transporter et au moins une poche à récipient (10) pour recevoir le récipient supporté dans une zone de ventre du récipient, dans lequel un dispositif de serrage élastique (2) est prévu pour maintenir le récipient dans la poche à récipient (10),
**caractérisé en ce que** :
respectivement deux mâchoires de serrage (20) sont regroupées dans une unité de serrage (3), qui est agencée entre deux poches à récipient (10) disposés l'un à côté de l'autre.

2. Dispositif selon la revendication 1, **caractérisé en ce que** le dispositif de serrage élastique (2) présente deux mâchoires de serrage (20) par poche de récipient (10).

3. Dispositif selon la revendication 1 ou 2, **caractérisé en ce qu'**au moins un mâchoires de serrage (20) du dispositif de serrage élastique (2) présente à son extrémité radialement tournée vers l'extérieur une aide d'insertion (24) s'écartant de la poche pour récipient (10).

4. Dispositif selon l'une quelconque des revendications précédentes, **caractérisé en ce que** le dispositif de serrage élastique (2) est conçu de manière qu'un récipient puisse être introduit dans la poche à récipient (10) à l'encontre de la prétension du dispositif de serrage élastique (2).

5. Dispositif selon l'une quelconque des revendications précédentes, **caractérisé en ce que** la prétension élastique des mâchoires de serrage (20) de l'unité de serrage (3) est réglable via un dispositif de réglage, de préférence au moyen d'un mécanisme à broche ou d'un mécanisme de calage.

6. Dispositif selon l'une quelconque des revendications précédentes, **caractérisé en ce que** la position radiale d'une zone de serrage (22) du dispositif de serrage élastique (2) peut être réglée au moyen d'un dispositif de réglage, de préférence au moyen d'un mécanisme à broche ou d'un mécanisme de calage.

7. Dispositif de fermeture pour fermer des récipients remplis, de préférence dans une installation de remplissage de boisson, comprenant au moins un dispositif de fermeture tournant avec un carrousel tournant autour d'un axe de rotation pour amener une fermeture de récipient à fermer une ouverture d'un récipient rempli,
**caractérisé par** :
au moins un dispositif de transport des récipients à fermer selon l'une quelconque des revendications précédentes.
